# DEMANDE DE BREVET EUROPEEN

(11) **EP 4 329 115 A1**
(43) Date de publication de la demande: **28.02.2024**
(21) Numéro de dépôt: 22306261.3
(22) Date de dépôt: 25.08.2022
(51) Int. Cl.: H01T 1/14, H01C 7/12, H01H 83/10, H02H 1/04, H02H 3/08, H02H 3/093

(54) **APPAREIL DE PROTECTION ÉLECTRIQUE POUR DÉCONNECTER UN DISPOSITIF DE PROTECTION CONTRE LES SURTENSIONS**

(71) Demandeur: Schneider Electric Industries SAS, 92500 Rueil-Malmaison (FR)
(72) Inventeur: DOMEJEAN, Eric, 38340 Voreppe (FR); TIAN, Simon, 38330 Saint-Ismier (FR); LI, Xiaodong-Mike, 201203 Shanghai (CN)
(74) Mandataire: Lavoix

(57) **Abrégé**

Cet appareil de protection électrique (4) pour déconnecter un dispositif de protection contre les surtensions (6), comprend une première électrode (12) et une seconde électrode (14), connectées respectivement à une première borne (8) et une deuxième borne (10) de l'appareil de protection électrique, une électrode mobile (22) de commutation d'arc connectée à la seconde borne (10), une chambre de coupure d'arc électrique (16) s'ouvrant sur la première électrode et la seconde électrode, et un mécanisme de déclenchement (20) adapté pour entraîner l'électrode mobile (22) depuis une position de fonctionnement vers une position de commutation. Pour une meilleure protection, l'appareil de protection électrique (4) comprend un transformateur de courant (28) avec un noyau (42), un enroulement primaire et un enroulement secondaire, l'enroulement primaire étant connecté entre la première borne et la première électrode pour transporter un courant (Ip) autour du noyau, et un circuit de filtrage (26) comprenant l'enroulement secondaire et un détecteur pour actionner un relais (24) du mécanisme de déclenchement (22) en réponse à un signal provenant de l'enroulement secondaire lorsque ce signal dépasse une valeur de seuil, alors que le circuit de filtrage (26) comprend en outre, connectés entre l'enroulement secondaire et le détecteur, un dispositif d'écrêtage de tension, un redresseur de tension et un filtre passe-bas, chacun étant connecté en parallèle avec l'enroulement secondaire et le détecteur pour filtrer le signal provenant de l'enroulement secondaire au détecteur, le circuit de filtrage étant ainsi configuré de telle sorte que le signal filtré comporte un signal proportionnel au courant de court-circuit dans l'enroulement primaire.

## Description

### DOMAINE TECHNIQUE

La présente divulgation concerne le domaine de la protection électrique et concerne notamment la protection électrique contre les surtensions.

### ARRIERE-PLAN TECHNOLOGIQUE

Dans les installations de distribution électrique, il est courant d'utiliser des dispositifs de protection contre les surtensions, tel que des parafoudres (« *surge protection device »* en anglais) dont la fonction est de protéger du matériel électrique contre des surtensions transitoires d'amplitude élevée, qui sont par exemple causées par des impacts de foudre.

Il est connu que ces appareils de protection contre les surtensions présentent une durée de vie limitée et qu'ils perdent leur efficacité au fil du temps et/ou lors d'utilisations répétées.

Lorsqu'un parafoudre arrive en fin de vie, il est souvent nécessaire d'y adjoindre un appareil de protection électrique capable de déconnecter le parafoudre en cas de défaut électrique autre qu'une surtension, tel qu'un court-circuit. Cela permet, en théorie, d'éviter une défaillance du parafoudre qui pourrait causer un risque d'incendie ou un dommage aux installations électriques.

Le brevet EP 1 554 744 B1 décrit un exemple d'un tel dispositif de protection.

Cependant, les appareils de protection classiquement utilisés dans ce rôle, tels que des disjoncteurs ou des fusibles, ne sont pas aptes à assurer une bonne protection. En effet, ces appareils de protection ne sont pas toujours capables de faire la différence entre un courant de courant-circuit, contre lequel le parafoudre doit être protégé et donc déconnecté, et une surtension, pour laquelle le parafoudre doit rester connecté afin que le parafoudre puisse protéger l'installation électrique contre la surtension.

C'est à ces inconvénients qu'entend plus particulièrement remédier l'invention en proposant un appareil de protection électrique pour déconnecter un dispositif de protection contre les surtensions capable de remédier aux inconvénients susmentionnés.

### RESUME DE L'INVENTION

À cet effet, l'invention concerne un appareil de protection électrique pour déconnecter un dispositif de protection contre les surtensions, comprenant :
- une première électrode connectée à une première borne de l'appareil de protection électrique,
- une seconde électrode connectée à une seconde borne de l'appareil de protection électrique,
- une électrode mobile de commutation d'arc connectée à la seconde borne,
- une chambre de coupure d'arc électrique s'ouvrant sur la première électrode et la seconde électrode, et
- un mécanisme de déclenchement adapté pour entraîner l'électrode mobile depuis une position de fonctionnement vers une position de commutation, de sorte qu'un arc électrique présent entre la première électrode et l'électrode mobile se déplace jusqu'à s'établir entre les première et seconde électrodes lorsque l'électrode mobile se déplace depuis la position de fonctionnement vers la position de commutation.

Selon l'invention, l'appareil de protection électrique comprend :
- un transformateur de courant avec un noyau, un enroulement primaire et un enroulement secondaire, l'enroulement primaire étant connecté entre la première borne et la première électrode pour transporter un courant autour du noyau ; et
- un circuit de filtrage comprenant l'enroulement secondaire et un détecteur pour actionner un relais du mécanisme de déclenchement en réponse à un signal provenant de l'enroulement secondaire lorsque ce signal dépasse une valeur de seuil,
alors que le circuit de filtrage comprend en outre, connectés entre l'enroulement secondaire et le détecteur, un dispositif d'écrêtage de tension, un redresseur de tension et un filtre passe-bas, chacun étant connecté en parallèle avec l'enroulement secondaire et le détecteur pour filtrer le signal provenant de l'enroulement secondaire au détecteur, le circuit de filtrage étant ainsi configuré de telle sorte que le signal filtré comporte un signal proportionnel au courant de court-circuit dans l'enroulement primaire.

Selon des aspects avantageux mais non obligatoires de l'invention, un tel appareil de protection électrique peut incorporer une ou plusieurs des caractéristiques suivantes prises isolément ou selon toute combinaison techniquement admissible :
- Le détecteur est un comparateur.
- Le filtre est un filtre intégrateur passe bas.
- L'électrode mobile est raccordée électriquement au deuxième contact électrique de façon permanente par l'intermédiaire d'un conducteur électrique.
- La position de fonctionnement correspond à un état dans lequel l'électrode mobile est en contact direct avec un contact fixe placé à très faible distance de la première électrode et dans lequel la position de commutation correspond à un état dans lequel l'électrode mobile est éloignée de la première électrode pour guider l'arc électrique vers la chambre de coupure.
- Le mécanisme de déclenchement de l'appareil de protection électrique comporte un levier de commande manuelle permettant de déplacer manuellement l'électrode mobile entre la position de fonctionnement et la position de commutation.
- Le mécanisme de déclenchement de l'appareil de protection électrique comporte un indicateur visuel qui indique la position dans laquelle se trouve l'électrode mobile.

L'invention concerne aussi un système comportant un appareil de protection électrique et un dispositif de protection contre les surtensions tel que défini précédemment, l'appareil de protection électrique étant sous la forme d'un module amovible pouvant être déconnecté du dispositif de protection contre les surtensions.

L'invention concerne également un système comportant un appareil de protection électrique et un dispositif de protection contre les surtensions tel que défini précédemment, l'appareil de protection électrique et le dispositif de protection contre les surtensions étant connectés électriquement en permanence et étant réunis au sein d'un même appareillage, par exemple dans un même boîtier.

Avantageusement, le dispositif de protection contre les surtensions comporte une varistance, la varistance étant connectée entre les première et deuxième bornes dans la position de fonctionnement, et étant isolée dans la position de commutation, la varistance ayant une résistance ohmique qui varie de manière non linéaire avec la tension appliquée à la varistance, la résistance étant élevée lorsque la tension est inférieure à une tension d'allumage et diminuant lorsque la tension est supérieure à la tension d'allumage.

### BREVE DESCRIPTION DES FIGURES

L'invention sera mieux comprise et d'autres avantages de celle-ci apparaîtront plus clairement à la lumière de la description qui va suivre d'un mode de réalisation d'un appareil de protection électrique pour déconnecter un dispositif de protection contre les surtensions, cette description étant donnée uniquement à titre d'exemple et faite en référence aux dessins annexés, dans lesquels :
[Fig 1] la figure 1 est un schéma simplifié d'un système de protection électrique comportant un dispositif de protection contre les surtensions et un appareil de déconnexion conforme à l'invention pour déconnecter le dispositif de protection contre les surtensions ;
[Fig 2] la figure 2 est un schéma synoptique simplifié illustrant le circuit de filtrage du système de protection électrique de la figure 1 ; et
[Fig 3] la figure 3 représente schématiquement un exemple de fonctionnement du système de protection électrique des figures 1 et 2 en présence d'un court-circuit et d'un événement de surtension.

Pour décrire de manière claire et concise la présente invention, les dessins ne sont pas nécessairement à l'échelle et certaines caractéristiques pourront être présentées sous une forme schématique.

### DESCRIPTION DETAILLEE DE MODES DE REALISATION

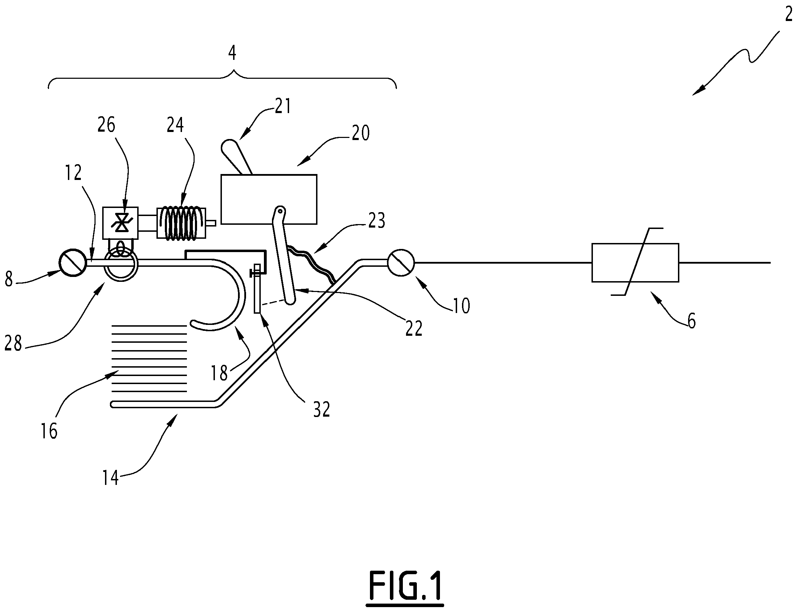

La figure 1 représente un système électrique 2 comportant un appareil de protection électrique 4 et un dispositif de protection 6 contre les surtensions, aussi communément appelé « parafoudre » (« *surge protection device* » en anglais, abrévié SPD).

Par exemple, le système électrique 2 est destiné à être installé dans une installation électrique, par exemple pour protéger des équipements électriques tels que des charges électriques et/ou des infrastructures de distribution électrique contre des surtensions.

L'appareil 4 et le dispositif de protection 6 sont ici connectés électriquement en série l'un avec l'autre.

Dans certains modes de réalisation, l'appareil de protection 4 et le dispositif de protection contre les surtensions 6 sont connectés électriquement en permanence et sont réunis au sein d'un même appareillage, par exemple dans un même boîtier.

Dans d'autres modes de réalisation, l'appareil de protection 4 se présente sous la forme d'un module amovible pouvant être déconnecté du dispositif de protection contre les surtensions 6. Ce module peut être vendu et distribué séparément et indépendamment du dispositif de protection contre les surtensions 6. Ce module peut comporter son propre boîtier.

Par exemple, le boîtier est un boîtier moulé en matière synthétique isolante, comme du plastique.

L'appareil 4 comporte une première borne de connexion 8 et une deuxième borne de connexion 10 servant à raccorder électriquement l'appareil 4 au dispositif de protection 6 contre les surtensions et/ou à une installation électrique.

Dans cet exemple, le dispositif de protection 6 contre les surtensions est connecté en série avec l'appareil de protection 4 par l'intermédiaire de la deuxième borne 10.

L'appareil 4 comporte une première électrode 12 connectée à la première borne 8, une seconde électrode 14 connectée à une seconde borne 10 et une chambre de coupure d'arc électrique 16.

Par exemple, la chambre de coupure 16 comporte des plaques métalliques formant un empilement destiné à fractionner un arc électrique en vue d'éteindre l'arc électrique.

La chambre de coupure 16 est conformée pour s'ouvrir sur la première électrode et la seconde électrode.

Par exemple, l'extrémité distale 18 de la première électrode 12, qui est disposée en regard de la deuxième électrode 14, présente une forme recourbée vers l'intérieur de la chambre de coupure (vers l'empilement de plaques métalliques), ce qui facilite le guidage d'un arc électrique vers la chambre de coupure 16.

L'appareil 4 comporte également un mécanisme de déclenchement 20 et une électrode mobile 22 de commutation d'arc connectée à la seconde borne 10.

Dans l'exemple illustré, l'électrode mobile 22 est raccordée électriquement au deuxième contact électrique 14 de façon permanente par l'intermédiaire d'un conducteur électrique 23, tel que, par exemple, un câble ou un treillis de câbles métalliques.

Le mécanisme de déclenchement 20 est adapté pour entraîner l'électrode mobile 22 depuis une première position, dite position de fonctionnement, vers une deuxième position, dite position de commutation.

Par position de fonctionnement, on entend par exemple que l'appareil 4 est par défaut dans l'état fermé lorsqu'il est en fonctionnement et n'est commuté vers l'état ouvert, pour empêcher la circulation du courant, que lorsqu'un ordre d'ouverture est envoyé en ce sens. En d'autres termes, l'appareil 4 est normalement dans l'état fermé.

L'appareil 4 est ainsi configuré pour que, lors de la commutation de l'électrode mobile 22 depuis la position de fonctionnement vers une position de commutation, un arc électrique présent entre la première électrode 12 et l'électrode mobile 22 se déplace jusqu'à s'établir entre les première et seconde électrodes 12 et 14 au furet à mesure que l'électrode mobile 22 se déplace depuis la position de fonctionnement vers la position de commutation.

L'appareil 4 comporte en outre un contact fixe 32 placé à très faible distance de la première électrode 12 et placé en regard de l'électrode mobile 22.

Dans la position de fonctionnement, l'électrode 18 est à distance du contact fixe 32. L'électrode mobile 22 est en contact direct avec le contact fixe 32.

La distance est suffisante pour maintenir un espace d'air (« *air gap »* en anglais) jouant le rôle d'isolant électrique entre l'électrode 18 et le contact fixe 32. Un arc électrique de faible tension peut néanmoins se former entre l'électrode 18 et le contact fixe 32 un espace d'air en cas d'événement de surtension.

À la fin de vie du dispositif de protection contre les surtensions 6, un courant de court-circuit traverse l'électrode 18, le contact fixe 32, et le contact mobile 22. Ce courant de court-circuit sera détecté par le capteur 28 et l'ordre d'ouverture est transmis à l'actionneur 24 qui entraine le mécanisme 20 pour ouvrir le contact mobile 22. Un arc électrique déjà présent entre l'électrode mobile 22 et le contact fixe 32 sera guidé vers la chambre de coupure 16, de par la conformation des électrodes 12 et 14. La tension d'arc générée dans la chambre de coupure permet de couper le courant de court-circuit pour protéger le reste de l'installation électrique.

Dans la position commutée, l'électrode mobile 22 s'éloigne du contact fixe 32 au-delà d'une certaine distance d'isolement. Ainsi, dans la position commutée, l'espace rempli d'air *(air gap)* entre l'électrode mobile 22 et le contact fixe 32 est plus grand que dans la position de fonctionnement et assure une isolation électrique galvanique.

En pratique, le dispositif de protection contre les surtensions 6 peut comporter une varistance, qui assure la protection contre les surtensions.

La varistance est connectée entre les première et deuxième bornes dans la position de fonctionnement, et est isolée dans la position de commutation.

La varistance a une résistance ohmique qui varie de manière non linéaire avec la tension appliquée entre les bornes de la varistance. Par exemple, la résistance est élevée lorsque la tension appliquée est inférieure à une tension d'allumage propre à la varistance et diminue lorsque la tension appliquée est supérieure à la tension d'allumage.

Avantageusement, le mécanisme de déclenchement 20 de l'appareil de protection 4 comporte un levier de commande manuelle 21 permettant de déplacer manuellement l'électrode mobile 22 entre la position de fonctionnement et la position de commutation. Le levier de commande manuelle 21 est, par exemple, conformé pour être manipulé par un utilisateur.

De façon avantageuse, le mécanisme de déclenchement 20 de l'appareil de protection 4 comporte un indicateur visuel qui indique la position dans laquelle se trouve l'électrode mobile 22, ce qui permet à un utilisateur de voir depuis l'extérieur de l'appareil 4 qu'un déclenchement s'est produit.

Comme cela sera expliqué dans ce qui suit, l'appareil de protection 4 comporte un déclencheur intégré qui est configuré pour, en présence d'un défaut électrique, selon la nature du défaut, déclencher de façon sélective la commutation de l'électrode mobile 22 pour déconnecter le dispositif de protection 6 lorsqu'il arrive en fin de vie mais, le dispositif de protection contre les surtensions 6 est maintenu connecté en cas d'événement de surtension (« *surge* » en anglais).

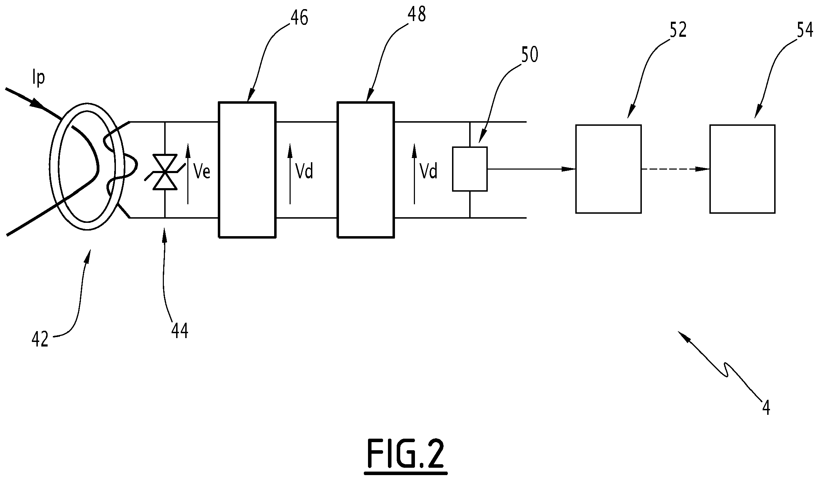

Des caractéristiques du déclencheur sont maintenant décrites en référence aux figures 1 et 2.

L'appareil 4 comprend un actionneur 24 un circuit de filtrage 26 et un transformateur de courant 28.

L'actionneur 24 est apte à activer la commutation du mécanisme de déclenchement 20 en vue de commuter l'électrode mobile 22 entre la position de fonctionnement et la position de commutation.

De préférence, l'actionneur 24 est un actionneur électromécanique, tel qu'un relais.

Par exemple, l'actionneur 24 est couplé mécaniquement au mécanisme 20.

Le transformateur de courant 28 comporte un noyau (noté 42 sur la figure 2), un enroulement primaire et un enroulement secondaire.

Par exemple, le noyau est un noyau magnétique.

L'enroulement primaire et l'enroulement secondaire sont formés autour du noyau.

L'enroulement primaire est connecté entre la première borne de connexion 8 et la première électrode 12 pour transporter un courant électrique, noté Ip, autour du noyau.

Le circuit de filtrage 26 comprend l'enroulement secondaire et un détecteur 50 configuré pour actionner l'actionneur 24 du mécanisme 20 (l'actionneur 24 et le mécanisme 20 sont respectivement notés 52 et 54 sur la figure 2) en réponse à un signal provenant de l'enroulement secondaire lorsque ce signal dépasse une valeur de seuil. Par exemple, la valeur seuil est choisie en fonction de caractéristiques de l'installation électrique et/ou en fonction de caractéristiques du dispositif 6.

Par exemple, la sortie du détecteur 50 est connectée à une entrée de commande de l'actionneur 24.

Dans de nombreux exemples, le détecteur 50 est un circuit électronique, tel qu'un circuit intégré ou un circuit analogique tel qu'un comparateur.

Le circuit de filtrage 26 comprend en outre, connectés de préférence dans cet ordre entre l'enroulement secondaire et le détecteur 50 : un dispositif d'écrêtage de tension 44, un redresseur de tension 46 et un filtre passe-bas 48.

Le dispositif d'écrêtage de tension 44, le redresseur de tension 46 et le filtre passe-bas 48 sont connectés en parallèle avec l'enroulement secondaire et le détecteur 50 pour filtrer le signal provenant de l'enroulement secondaire.

De façon générale, le circuit de filtrage 26 peut être réalisé au moyen d'un ou de plusieurs circuits électriques et/ou composants électroniques et/ou électromécaniques.

Sur la figure 2, la tension Ve représente la tension électrique entre les bornes de l'écrêteur 44, la tension Vr représente la tension électrique entre les bornes du redresseur 46 et la tension Vd représente la tension électrique entre les bornes du filtre passe-bas 48.

Par exemple, le filtre 48 est un filtre intégrateur.

Le circuit de filtrage 26 est ainsi configuré de telle sorte que le signal filtré, obtenu à la sortie du filtre passe-bas 48, comporte un signal proportionnel à l'intensité du courant Ip dans l'enroulement primaire (notamment lorsqu'un courant de court-circuit est présent dans l'enroulement primaire).

Le filtrage au moyen du circuit de filtrage 26 et notamment par le filtre passe-bas 48 permet de faire la différence entre les deux types de courant de défaut susceptibles d'apparaître : d'une part un événement de surtension (surge) et d'autre part un court-circuit.

Par exemple, un événement de surtension se caractérise par une onde de choc brève et transitoire. Typiquement, l'amplitude du courant Ip est très élevée, pouvant par exemple aller jusqu'à 40 kA - kilo Ampère -, mais ce défaut ne subsiste que pendant une faible durée, généralement une durée inférieure à 1 ms - milliseconde -, par exemple, une durée comprise entre 20 µs et 350 µs - microseconde -.

Le courant de court-circuit présente, par contraste, une durée plus longue qu'une surtension (par exemple, une durée inférieure ou égale à 100 millisecondes, et généralement comprise entre 2 ms et 10 ms).

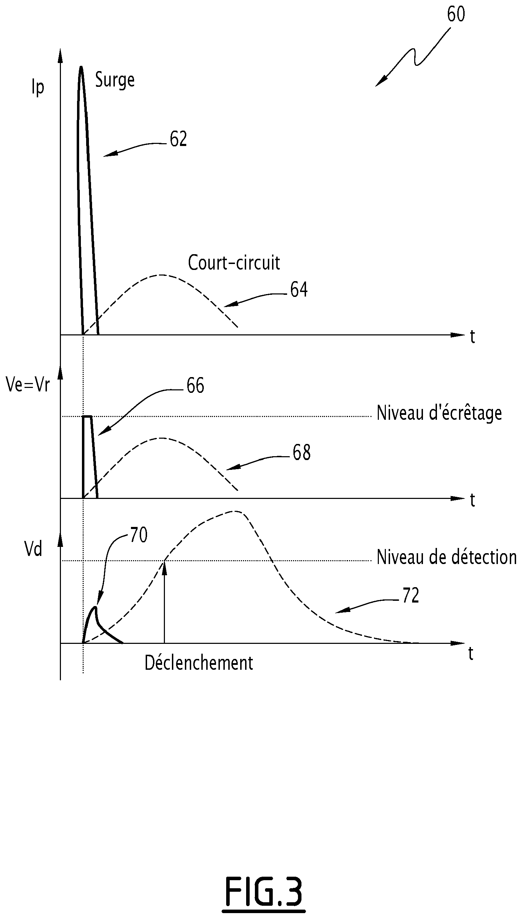

Un exemple de fonctionnement est maintenant décrit en référence à la figure 3 pour les deux cas de figure auxquels l'appareil 4 peut être confronté (événement de surtension et court-circuit, respectivement).

Sur cette figure 3, dans l'exemple 60 sont illustrées en fonction du temps (axe des abscisses, noté « t ») les formes d'onde du courant de défaut Ip circulant dans l'enroulement primaire (courbes 62 et 64), de la tension redressée Vr (courbes 66 et 68) et de la tension Vd aux bornes du détecteur 50 (courbes 70 et 72). Les courbes 62, 66 et 70 correspondant au cas d'un événement de surtension (*surge*) sont dessinées en trait plein, tandis que les courbes 64, 68 et 72 correspondant au cas d'un court-circuit sont dessinées en tirets.

En fonctionnement normal, le contact mobile 22 est maintenu à une distance proche de la première électrode 12 (du contact fixe 32), et l'espace dans l'air *(air gap)* entre l'électrode mobile 22 et le contact fixe 32 assure un isolement galvanique, de sorte qu'il n'y a pas de courant de fuite dans la varistance du dispositif 6. Cela limite le vieillissement prématuré de la varistance.

En cas d'événement de surtension, un arc électrique apparaît entre l'électrode mobile 22 et le contact fixe 32 et un courant électrique circule entre l'électrode mobile 22 et le contact fixe 32 sans générer une tension de pic élevée.

Le dispositif 4 n'est pas déclenché et l'électrode mobile 32 reste dans sa position de fonctionnement.

Cela permet au dispositif 6 de jouer son rôle de protection contre la surtension : la tension totale de la protection est alors la tension d'écrêtage de la varistance du dispositif 6, à laquelle peut s'ajouter la tension d'écrêtage de l'espace d'air *(air gap)* entre l'électrode mobile 22 et le contact fixe 32.

Cependant, la situation change lorsque la varistance du dispositif 6 présente des performances dégradées, par exemple parce qu'elle arrive en fin de vie, ou après avoir joué son rôle lors d'un événement de surtension.

Dans ce cas, la varistance du dispositif 6 a alors une impédance plus faible que sa valeur d'impédance nominale. Comme l'espace d'air (*air gap*) entre l'électrode mobile 22 et le contact fixe 32 est toujours passant, la tension nominale dans l'installation électrique (la tension réseau) peut suffire à générer un courant de court-circuit ou un fort courant circulant dans la varistance et l'espace d'air *(air gap)* entre l'électrode mobile 22 et le contact fixe 32.

L'appareil 4 doit alors se déclencher pour couper ce courant de court-circuit pour protéger l'installation.

Ainsi, l'électrode mobile 22 est commutée vers sa position déclencher éteindre l'arc électrique présent entre l'électrode mobile 22 et le contact fixe 32.

La coupure du courant de court-circuit est faite par la chambre de coupure. L'arc électrique initié dans l'espace d'air (*air gap*) entre l'électrode mobile 22 et le contact fixe 32 est guidé vers la chambre de coupure 16, ce qui génère une tension d'arc supérieure à la tension de l'installation électrique, forçant ainsi le courant de court-circuit vers zéro.

Le circuit de filtrage 26 permet de discriminer entre un événement de surtension et un court-circuit.

Le transformateur de courant 28 permet d'obtenir un courant de mesure qui est l'image du courant Ip circulant dans l'enroulement primaire, tout en assurant une isolation galvanique.

L'écrêteur 44 permet d'absorber le pic de surintensité résultant de l'événement de surtension (courbe 62), en ne laissant passer que la partie de faible amplitude (courbe 66).

Le redresseur 46 assure que le dispositif 4 fonctionne de la même façon pour les courants de sens positif et négatif.

Le détecteur 50 compare ensuite le signal filtré avec un seuil.

Si le signal est inférieur au seuil prédéfini, alors le mécanisme 20 n'est pas déclenché et l'électrode 22 reste en position de fonctionnement.

Si au contraire le signal atteint ou dépasse le niveau de seuil, alors le détecteur 50 commande l'actionnement de l'actionneur 24 pour déclencher le mécanisme 20 en vue de commuter le contact mobile 22 vers la position de commutation, en vue de guider l'arc électrique vers la chambre de coupure 16.

La pente de la tension Vd (la tension après passage par le filtre intégrateur 48) est proportionnelle au courant Ip. Une fois que l'arc électrique a été interrompu par le déclenchement de l'appareil 4, le courant Ip passe à zéro et la tension Vd se décharge via le courant de fuite du détecteur et descend progressivement vers zéro.

L'invention permet à l'appareil de protection 4 de mieux distinguer un court-circuit d'un événement de surtension, notamment en utilisant, à la place des déclencheurs magnétiques classiquement utilisés conjointement avec les dispositifs de protection contre les surtensions, un déclencheur amélioré comportant le cœur magnétique et le circuit de traitement. Ce dernier comporte un filtre qui permet de discriminer entre un événement de surtension, par exemple causé par la foudre, et un courant de court-circuit.

On obtient ainsi un système doté d'un mécanisme de déclenchement sélectif qui ouvre les contacts électriques du dispositif de protection contre les surtensions lorsqu'il arrive en fin de vie (causant ainsi un court-circuit) mais n'ouvre pas les contacts électriques du dispositif de protection contre les surtensions en cas d'événement de surtension.

De plus, le mécanisme d'ouverture par manette 20 permet d'ouvrir les contacts pour assurer un isolement de sécurité lors l'opérations de maintenance. Un indicateur permet à un utilisateur de constater lorsqu'un déclenchement de l'appareil 4 a eu lieu.

Les modes de réalisation et les variantes envisagés ci-dessus peuvent être combinés entre eux pour créer de nouveaux modes de réalisation, dans les limites définies par les revendications.

## Revendications

1. Appareil de protection électrique (4) pour déconnecter un dispositif de protection contre les surtensions (6), comprenant :
- une première électrode (12) connectée à une première borne (8) de l'appareil de protection électrique,
- une seconde électrode (14) connectée à une seconde borne (10) de l'appareil de protection électrique,
- une électrode mobile (22) de commutation d'arc connectée à la seconde borne (10),
- une chambre de coupure d'arc électrique (16) s'ouvrant sur la première électrode et la seconde électrode, et
- un mécanisme de déclenchement (20) adapté pour entraîner l'électrode mobile (22) depuis une position de fonctionnement vers une position de commutation, de sorte qu'un arc électrique présent entre la première électrode (12) et l'électrode mobile (22) se déplace jusqu'à s'établir entre les première et seconde électrodes (18, 14) lorsque l'électrode mobile (22) se déplace depuis la position de fonctionnement vers la position de commutation,
**caractérisé en ce que** l'appareil de protection électrique (4) comprend :
- un transformateur de courant (28) avec un noyau (42), un enroulement primaire et un enroulement secondaire, l'enroulement primaire étant connecté entre la première borne et la première électrode pour transporter un courant (Ip) autour du noyau ; et
- un circuit de filtrage (26) comprenant l'enroulement secondaire et un détecteur (50) pour actionner un relais (24, 50) du mécanisme de déclenchement (22, 52) en réponse à un signal provenant de l'enroulement secondaire lorsque ce signal dépasse une valeur de seuil,
dans lequel le circuit de filtrage (26) comprend en outre, connectés entre l'enroulement secondaire et le détecteur, un dispositif d'écrêtage de tension (44), un redresseur de tension (46) et un filtre passe-bas (48), chacun étant connecté en parallèle avec l'enroulement secondaire et le détecteur pour filtrer le signal provenant de l'enroulement secondaire au détecteur, le circuit de filtrage (26) étant ainsi configuré de telle sorte que le signal filtré comporte un signal proportionnel au courant de court-circuit dans l'enroulement primaire.

2. Appareil (4) selon la revendication 1, dans lequel le détecteur (50) est un comparateur.

3. Appareil (4) selon l'une quelconque des revendications précédentes, dans lequel le filtre (48) est un filtre intégrateur passe bas.

4. Appareil (4) selon l'une quelconque des revendications précédentes, dans lequel l'électrode mobile (22) est raccordée électriquement au deuxième contact électrique (14) de façon permanente par l'intermédiaire d'un conducteur électrique (23).

5. Appareil (4) selon l'une quelconque des revendications précédentes, dans lequel la position de fonctionnement correspond à un état dans lequel l'électrode mobile (22) est en contact direct avec un contact fixe (32) placé à très faible distance de la première électrode (12) et dans lequel la position de commutation correspond à un état dans lequel l'électrode mobile (22) est éloignée de la première électrode pour guider l'arc électrique vers la chambre de coupure (16).

6. Appareil (4) selon l'une quelconque des revendications précédentes, dans lequel le mécanisme de déclenchement (20) de l'appareil de protection électrique (4) comporte un levier de commande manuelle (21) permettant de déplacer manuellement l'électrode mobile (22) entre la position de fonctionnement et la position de commutation.

7. Appareil (4) selon l'une quelconque des revendications précédentes, dans lequel le mécanisme de déclenchement (20) de l'appareil de protection électrique (4) comporte un indicateur visuel qui indique la position dans laquelle se trouve l'électrode mobile (22).

8. Système (2) comportant un appareil de protection électrique (4) et un dispositif de protection contre les surtensions (6) selon l'une quelconque des revendications précédentes, l'appareil de protection électrique (4) étant sous la forme d'un module amovible pouvant être déconnecté du dispositif de protection contre les surtensions (6).

9. Système (2) comportant un appareil de protection électrique (4) et un dispositif de protection contre les surtensions (6) selon l'une quelconque des revendications 1 à 7, l'appareil de protection électrique (4) et le dispositif de protection contre les surtensions (6) étant connectés électriquement en permanence et étant réunis au sein d'un même appareillage, par exemple dans un même boîtier.

10. Système selon les revendications 8 ou 9, dans lequel le dispositif de protection contre les surtensions (6) comporte une varistance, la varistance étant connectée entre les première et deuxième bornes dans la position de fonctionnement, et étant isolée dans la position de commutation, la varistance ayant une résistance ohmique qui varie de manière non linéaire avec la tension appliquée à la varistance, la résistance étant élevée lorsque la tension est inférieure à une tension d'allumage et diminuant lorsque la tension est supérieure à la tension d'allumage.
